# EUROPEAN PATENT APPLICATION

(11) **EP 4 660 002 A1**
(43) Date of publication of application: **10.12.2025**
(21) Application number: 25180194.0
(22) Date of filing: 02.06.2025
(51) Int. Cl.: B60N 2/02, B60N 2/06, B60N 2/12, B60N 2/20, B60N 2/22, B60N 2/30

(54) **FRONT SEAT THAT CAN BE FLATTENED FORWARD**

(30) Priority: 03.06.2024 CN 202421264835 U
(71) Applicant: Adient (Chongqing) Automotive Components Co., Ltd., Liangjiang New Area, Chongqing 401122 (CN)
(72) Inventor: LIU, Tianlong, Chongqing, 401122 (CN); YI, Qihong, Chongqing, 401122 (CN); CHEN, Zhiyong, Chongqing, 401122 (CN); JIA, Wei, Chongqing, 401122 (CN); TAN, Hongwei, Chongqing, 401122 (CN)
(74) Representative: Liedtke & Partner Patentanwälte

(57) **Abstract**

The present utility model discloses a front seat that can be flattened forward, comprising a second driving assembly and a sliding rail assembly comprising an upper sliding rail module and a lower sliding rail module, a rear end of the upper sliding rail module being fixedly provided with an adapter component that extends upward, and a backrest framework being rotatably mounted on the adapter component; a seat cushion framework is provided on an upper side of the upper sliding rail module, a first connecting rod being provided between a front part of the seat cushion framework and the upper sliding rail module, two ends of the first connecting rod being hingedly connected to the seat cushion framework and the upper sliding rail module, respectively, and a rear part of the seat cushion framework being fitted onto the upper sliding rail module so as to be able to move forward and backward; a second driving assembly is used for driving the seat cushion framework to move forward and backward relative to the upper sliding rail module. A beneficial effect of the present utility model is that the seat cushion framework as a whole can move forward relative to the upper sliding rail module, eliminating interference with the space under the backrest framework, providing the backrest framework with space to fold forward, enabling the backrest framework to be flattened forward by a large angle.

## Description

### Technical field

The present utility model relates to the technical field of automobile seats, and in particular to a front seat that can be flattened forward.

### Background art

The automobile seat is one of the most important components of an automobile; it can provide a comfortable and safe riding position for a driver. With the expansion of the automobile market, customers are demanding more intelligent and comfortable automobiles, especially for rear seat passengers, who want to have more space to move around while resting.

Currently, some front seats have a function of tipping forward, i.e. the angle of the backrest can be adjusted forward, allowing the rear passenger to rest with improved foot space and support for leg comfort. However, in the prior art, the backrest of the front seat is typically rotatably mounted at the rear end of the seat cushion frame, and, when the backrest is rotated forward, the seat cushion is stationary relative to the backrest, and the backrest cannot be flattened forward at a large angle, due to interference from the seat cushion, resulting in limited space for the rear passenger to move and less comfortable support for the passenger's legs.

### Summary of the utility model

In view of this, the present utility model provides a front seat that can be flattened forward, solving the problem of spatial interference of the seat cushion when the backrest is adjusted forward, such that the backrest can be flattened forward at a large angle, improving the moving space and riding comfort for the rear passenger.

To achieve the abovementioned objective, technical solutions of the present utility model are as follows:
A front seat that can be flattened forward, characterized by comprising:
a sliding rail assembly, the sliding rail assembly comprising a lower sliding rail module and an upper sliding rail module slidingly arranged on the lower sliding rail module, the lower sliding rail module being used for fitting to an automobile floor, and a rear end of the upper sliding rail module being fixedly provided with an adapter component that extends upward;
a backrest framework that is rotatably mounted on the adapter component, a first driving assembly being provided on the backrest framework, and the first driving assembly being used for driving the backrest framework to rotate forward or backward;
a seat cushion framework that is located on an upper side of the upper sliding rail module, a first connecting rod being provided between a front part of the seat cushion framework and the upper sliding rail module, two ends of the first connecting rod being hingedly connected to the seat cushion framework and the upper sliding rail module, respectively, and a rear part of the seat cushion framework being fitted onto the upper sliding rail module so as to be able to move forward and backward; and
a second driving assembly that is used for driving the seat cushion framework to move forward and backward relative to the upper sliding rail module, wherein in the process of the second driving assembly driving the rear part of the seat cushion framework to move forward, the first connecting rod can rotate about the centre of the hinge connection thereof to the upper sliding rail module, thereby driving the front part of the seat cushion framework to move forward.

With the above structural design, when it is necessary for the backrest to be flattened forward, the second driving assembly drives the rear part of the seat cushion framework to move forward, and, since the two ends of the first connecting rod are hingedly connected to the front part of the seat cushion framework and the upper sliding rail module, respectively, in the process of the rear part of the seat cushion framework moving forward, the first connecting rod can rotate about the centre of the hinge connection thereof to the upper sliding rail module, thereby driving the front part of the seat cushion framework to move forward, that is, the seat cushion framework moving forward as whole relative to the upper sliding rail module, thereby eliminating interference with the space under the backrest framework, providing the backrest framework with space to fold forward, enabling the backrest framework to be flattened forward by a large angle. Preferably, the upper sliding rail module comprises an upper rail, the upper rail being provided with a sliding slot that extends along the length thereof, and the rear part of the seat cushion framework being fitted in the sliding slot by means of a supporting component so as to be able to move forward and backward.

Preferably, the second driving assembly comprises an electric motor, a lead screw that is driven to rotate by the electric motor, and a nut sleeve that is threaded onto the lead screw, a base of the electric motor being rotatably fitted on the upper sliding rail module, the nut sleeve and the supporting component maintaining a fixed connection, the supporting component being rotatably connected to a rear part of the seat cushion framework by means of a pin, and the pin being supported in the sliding slot.

Preferably, the sliding slot comprises an inclined section and a horizontal section, which are successively connected from the front to the rear, and the height at a front end of the inclined section is lower than the height at a rear end.

Preferably, two groups of the upper rail are provided, the two groups of upper rails being arranged symmetrically, and two sides of the rear part of the seat cushion framework being fitted onto the two groups of upper rails so as to be able to move forward and backward.

Preferably, two groups of the first connecting rod are provided, upper ends of the two groups of first connecting rods being hingedly connected to two sides of the front part of the seat cushion framework, respectively, and lower ends of the two groups of first connecting rods being respectively hingedly connected to the corresponding upper rail.

Preferably, the second driving assembly is arranged at an inner side of one of the groups of upper rails, the base of the electric motor is rotatably fitted to a front part of an inner side of this upper rail, and the lead screw extends backward along the length of the upper rail.

Preferably, the rear part of the seat cushion framework is provided with a supporting transverse rod, two ends of the supporting transverse rod being connected to an adapter that extends downward, and the pin being fitted to a lower part of the adapter.

Preferably, the first connecting rod is arranged obliquely between the front part of the seat cushion framework and the upper sliding rail module. The beneficial effects of the present utility model compared to the prior art are:
1. With the front seat that can be flattened forward provided by the present utility model, when it is necessary for the backrest to be flattened forward, the second driving assembly drives the rear part of the seat cushion framework to move forward, and, since the two ends of the first connecting rod are hingedly connected to the front part of the seat cushion framework and the upper sliding rail module, respectively, in the process of the rear part of the seat cushion framework moving forward, the first connecting rod can rotate about the centre of the hinge connection thereof to the upper sliding rail module, thereby driving the front part of the seat cushion framework to move forward, that is, the seat cushion framework moving forward as whole relative to the upper sliding rail module, thereby eliminating interference with the space under the backrest framework, providing the backrest framework with space to fold forward, enabling the backrest framework to be flattened forward by a large angle, improving the space to move and riding comfort for the rear passenger.
2. With the front seat that can be flattened forward provided by the present utility model, by means of the first connecting rod being obliquely arranged between the seat cushion framework and the upper sliding rail module, i.e. the seat being in the sitting posture state, the upper end of the first connecting rod is arranged obliquely backward relative to the lower end, and, when the rear part of the seat cushion framework moves forward, the first connecting rod can be rotated upward from the rear and then forward, centred on the hinge point at the lower end thereof, which can maximally drive the seat cushion framework to move forward, further increasing the clearance space behind the seat cushion framework, thereby increasing the angle by which the backrest framework tilts forward.
3. With the front seat that can be flattened forward provided by the present utility model, there are technical advantages of simple structure and compact arrangement, and by arranging the electric motor at the front end of the inner side of the upper rail, space is left for the rear part of the seat cushion framework, to help enable the backrest framework to be flattened forward.

### Brief description of the drawings

- Fig. 1: is a structural schematic drawing of a front seat;
- Fig. 2: is a side view of a front seat in a sitting posture state;
- Fig. 3: is a side view of a front seat in a folded state;
- Fig. 4: is a cutaway view of a front seat in a sitting posture state;
- Fig. 5: is a cutaway view of a front seat in a folded state;
- Fig. 6: is a structural schematic drawing of a sliding rail assembly 1;
- Fig. 7: is a side view of one of the groups of upper rails 11.

### Detailed description of embodiments

The present utility model is explained further below with reference to the embodiments and accompanying drawings.

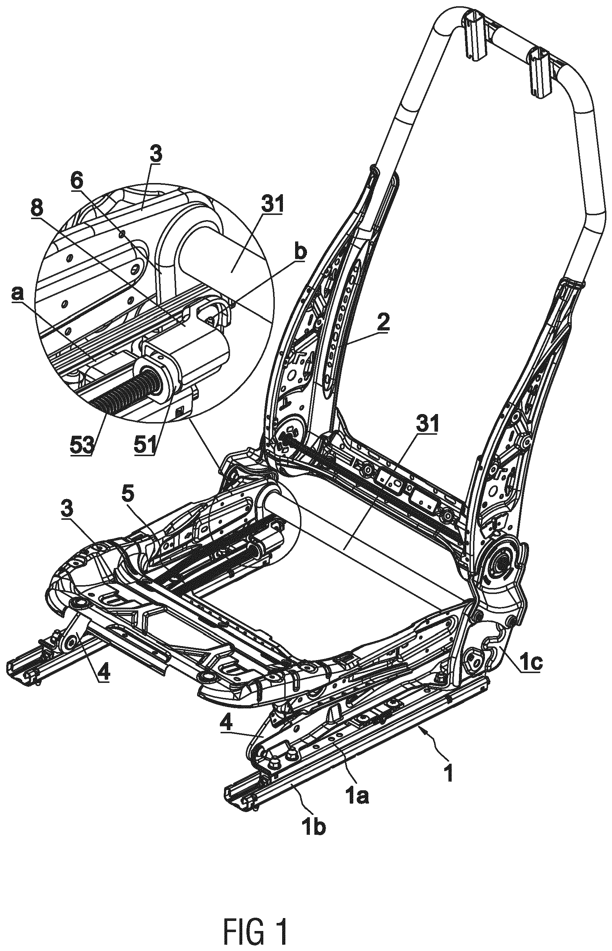

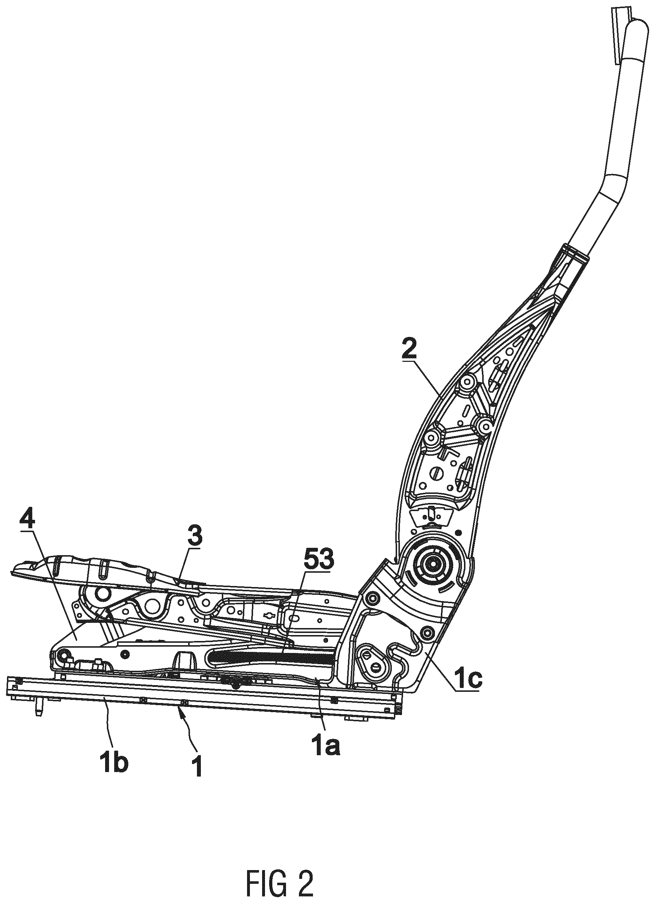

As shown in Fig. 1, a front seat that can be flattened forward comprises a sliding rail assembly 1, the sliding rail assembly comprising a lower sliding rail module 1b that is fitted to an automobile floor, and an upper sliding rail module 1a slidingly arranged on the lower sliding rail module 1b, a rear end of the upper sliding rail module 1a being fixedly provided with an adapter component 1c that extends upward, and a backrest framework 2 being rotatably mounted on the adapter component 1c. The backrest framework 2 is provided with a first driving assembly, which is capable of driving the backrest framework 2 to rotate forward or backward centred on the adapter component 1c. In view of Fig. 2, a seat cushion framework 3 is provided on an upper side of the upper sliding rail module 1a, a first connecting rod 4 being provided between a front part of the seat cushion framework 3 and the upper sliding rail module 1a, two ends of the first connecting rod 4 being hingedly connected to the front part of the seat cushion framework 3 and the upper sliding rail module 1a, respectively, and a rear part of the seat cushion framework 3 being fitted onto the upper sliding rail module 1a so as to be able to move forward and backward. The front seat that can be flattened forward further comprises a second driving assembly 5, the second driving assembly 5 being capable of driving the seat cushion framework 3 to move forward and backward relative to the upper sliding rail module 1a. In the process of the second driving assembly 5 driving the rear part of the seat cushion framework 3 to move forward, the first connecting rod 4 can rotate about the centre of the hinge connection thereof to the upper sliding rail module 1a, thereby driving the front part of the seat cushion framework 3 to move forward.

Based on the above structural design, the working principle of the front seat provided in the present embodiment is as follows: referring to Figs. 1 to 3, the second driving assembly 5 driving the rear part of the seat cushion framework 3 to move forward, and, since the two ends of the first connecting rod 4 are hingedly connected to the front part of the seat cushion framework 3 and the upper sliding rail module 1a, respectively, in the process of the rear part of the seat cushion framework 3 moving forward, the first connecting rod 4 being capable of rotating about the centre of the hinge connection thereof to the upper sliding rail module 1a, thereby driving the front part of the seat cushion framework 3 to move forward, that is, the seat cushion framework 3 moving forward as whole relative to the upper sliding rail module 1a, thereby eliminating interference with the space under the backrest framework 2, providing the backrest framework 2 with space to fold forward, enabling the backrest framework 2 to be flattened forward by a large angle, improving the space to move and riding comfort for the rear passenger. When the function of flattening the backrest forward is used, the seat cushion framework 3 is first controlled to move forward using the second driving assembly 5, and then the backrest framework 2 is driven by the first driving assembly to rotate forward to be fully flattened. Conversely, when the seat is restored to a sitting posture, the backrest framework 2 is first driven to rotate backward to an upright state, and then the seat cushion framework 3 is controlled by the second driving assembly 5 to move backward.

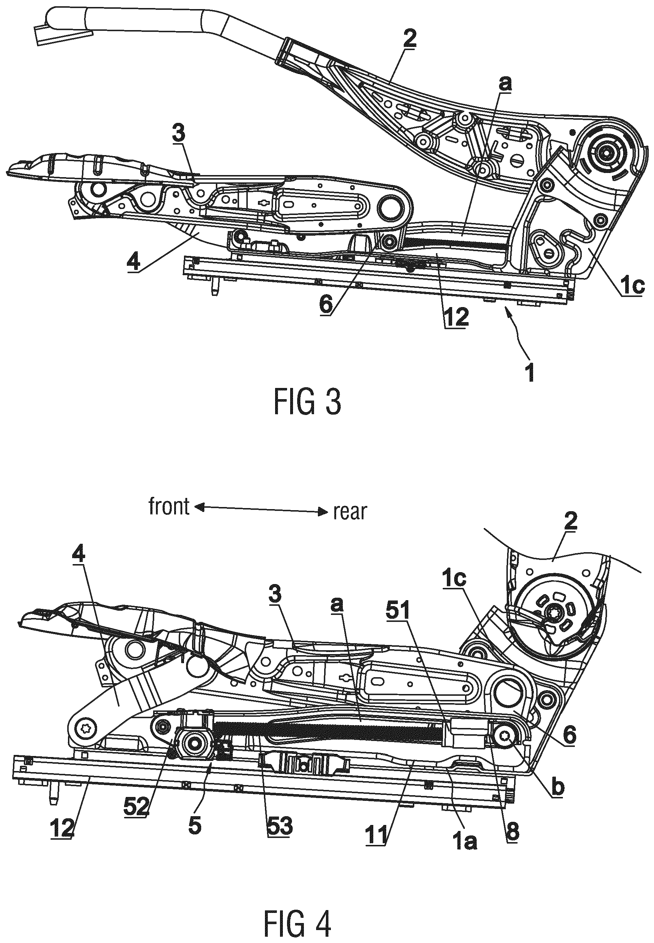

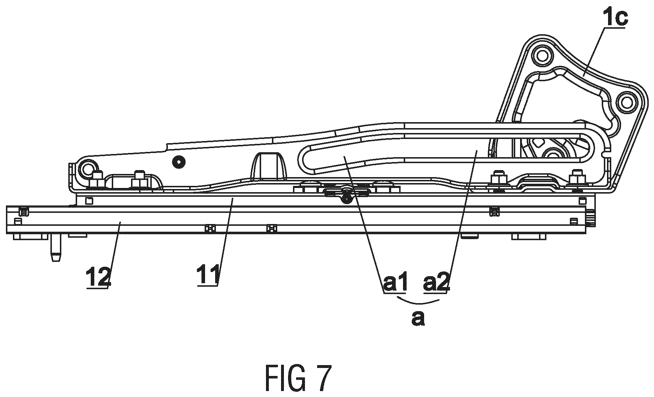

Further, referring to Figs. 4 and 7, the upper sliding rail module 1a comprises an upper rail 11, the upper rail 11 being provided with a sliding slot a that extends along the length thereof, and the rear part of the seat cushion framework 3 being fitted in the sliding slot a by means of a supporting component 8 so as to be able to move forward and backward. So designed, the sliding slot a has a guiding and limiting function, which enables the forward movement of the seat cushion framework 3 to be more smooth and precise.

Referring to Figs. 1 and 4, the second driving assembly 5 comprises an electric motor 52, a lead screw 53 that is driven to rotate by the electric motor 52, and a nut sleeve 51 that is threaded onto the lead screw 53, a base of the electric motor 52 being rotatably fitted on the upper sliding rail module 1a, the nut sleeve 51 and the supporting component 8 maintaining a fixed connection, the supporting component 8 being rotatably connected to a rear part of the seat cushion framework 3 by means of a pin b, and the pin b being supported in the sliding slot a. The electric motor 52 drives the nut sleeve 51 to move linearly on the lead screw 53, which can drive the seat cushion framework 3 to move forward along the length of the sliding slot a.

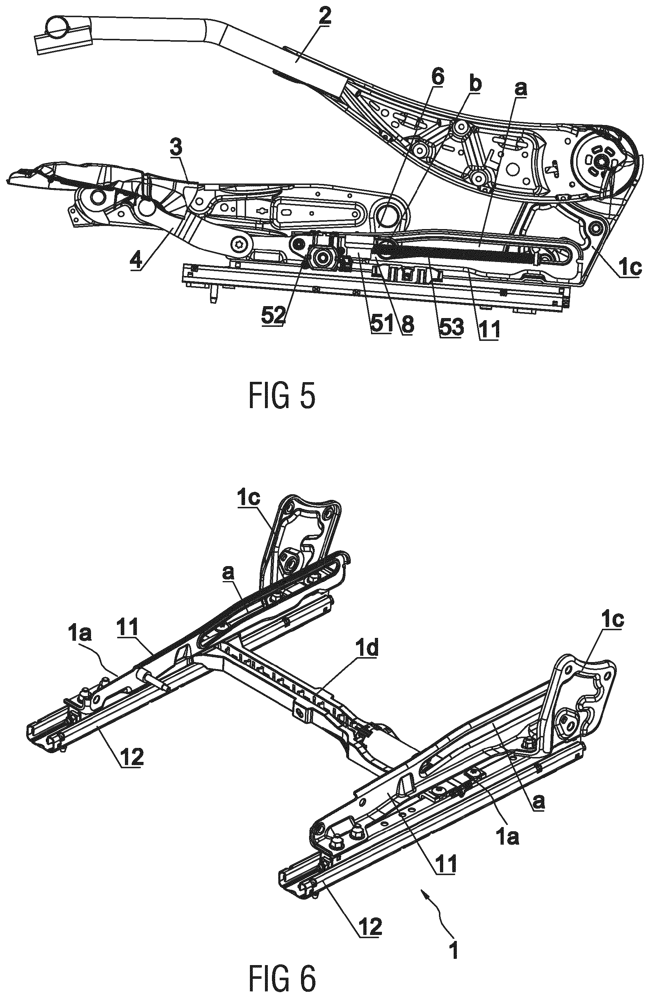

Further referring to Fig. 7, in the present embodiment, the sliding slot a is arranged in middle and rear regions of the upper rail 11, the sliding slot a comprising an inclined section a1 and a horizontal section a2, which are successively connected from the front to the rear, wherein a height of a front end of the inclined section a1 to a horizontal plane is lower than the height at the rear end. When the seat is in the sitting posture state, the pin b is located at the rearmost end of the sliding slot a (see Fig. 4), and, in the process of the second driving assembly 5 driving the rear part of the seat cushion framework 3 to move forward, the pin b first passes through the horizontal section a2 and then slides down to the foremost end of the inclined section a1 under the guidance of the sliding slot a (see Fig. 5); that is, the seat cushion framework 3 is driven to first move forward horizontally and then downward. Since the seat cushion design of an automobile seat is usually tilted slightly back down, such a path of motion can further increase the clearance space behind the seat cushion framework 3 to ensure that the backrest framework 2 can be flattened forward.

As shown in Figs. 2 and 4, in the present embodiment, the first connecting rod 4 is arranged obliquely between the front part of the seat cushion framework 3 and the upper sliding rail module 1a; that is, with the seat in the sitting posture state, the upper end of the first connecting rod 4 with a backward tilt is hingedly connected to the front part of the seat cushion framework 3. The advantage of this design is that, when the seat cushion framework 3 is moved forward, the first connecting rod 4 is first rotated upward from the rear and then downward, centred on the hinge point at the lower end thereof, ensuring a maximum rotation angle of the first connecting rod 4, such that the first connecting rod 4 can maximally drive the seat cushion framework 3 to move as far forward as possible (see Fig. 5). In addition, when the upper end of the first connecting rod 4 is rotated upward to the highest point, the rear part of the seat cushion framework 3 is enabled to have a downward inclined state, further increasing the space for the backrest framework 2 to fold downward; thereafter, the first connecting rod 4 continues to rotate downward, and the seat cushion framework 3 can be moved forward and then downward as a whole, that is, maximally ensuring clearance space for the seat cushion framework 3, increasing the angle at which the backrest framework 2 is tipped forward, thereby providing sufficient space for the rear passenger to move, thus increasing the riding comfort of the rear passenger.

Referring to Figs. 1 and 6, in the present embodiment, the lower sliding rail module 1b comprises two groups of lower rails 12 fitted symmetrically in parallel on an automobile floor, and two groups of the upper rail 11 are provided, the two groups of upper rails 11 being slidably arranged on the two groups of lower rails 12, respectively, and the two groups of upper rails 11 being fixedly supported with a transverse beam 1d therebetween, to facilitate the two groups of upper rails 11 to synchronously slide forward and backward. Further in view of Figs. 3 and 4, two sides of the rear part of the seat cushion framework 3 are fitted on the two groups of upper rails 11 so as to be able to move forward and backward.

Further, as shown in Fig. 1, in order to ensure the smoothness and stability of the seat cushion framework 3 as a whole when sliding forward, in the present embodiment, the rear part of the seat cushion framework 3 is provided with a supporting transverse rod 31; further in view of Figs. 3 and 4, it can be seen that two ends of this supporting transverse rod 31 are both connected to an adapter 6 that extends downward, two pins b are provided, respectively fitted to the lower parts of the two adapters 6, and the two pins b are respectively supported in the sliding slot a of the corresponding upper rail 11, and the supporting component 8 is rotatably connected to one of the pins b. The nut sleeve 51 drives the supporting component 8 to slide forward or backward in the sliding slot a, which can synchronously drive the pin b on the adapter 6 of the other side to synchronously slide forward or backward.

Referring to Fig. 1, two groups of the first connecting rod 4 are provided, respectively arranged on two sides of the front part of the seat cushion framework 3, and upper ends of the two groups of first connecting rods 4 are respectively hingedly connected to two sides of the front part of the seat cushion framework 3, and lower ends of the two groups of first connecting rods 4 are respectively hingedly connected to the upper rail 11 on the same side, ensuring the balanced and smooth movement of the seat cushion framework 3.

As further shown in Fig. 1, the second driving assembly 5 is arranged at an inner side of one of the groups of upper rails 11, in order to cooperate with the pin b to be able to smoothly enter the inclined section a1 from the horizontal section a2; as can be seen in Fig. 4, the base of the electric motor 52 is rotatably fitted on the front part of the inner side of this upper rail 11, and the lead screw 53 extends backward along the length of the upper rail 11.

Based on the structural layout of the second driving assembly 5 described above, the compactness of the internal structure of the seat cushion is enhanced, the parts are simplified, and the space occupied thereby is advantageously reduced, and by putting the electric motor 52 in front, space is left for the rear part of the seat cushion framework 3, which further helps to allow the backrest framework 2 to be flattened forward.

Finally, it should be noted that the foregoing merely describes preferred embodiments of the present utility model, and that those skilled in the art, under the teachings of the present utility model, without departing from the purpose and claims thereof, may make various similar representations, and such transformations all fall within the scope of protection of the present utility model.

### List of References

- 1: sliding rail assembly
- 1a: upper sliding rail module
- 1b: lower sliding rail module
- 1c: adapter component
- 1d: transverse beam
- 2: backrest framework
- 3: seat cushion framework
- 4: first connecting rod
- 5: second driving assembly
- 6: adapter
- 8: supporting component
- 11: upper rail
- 31: supporting transverse rod
- 51: nut sleeve
- 52: electric motor
- 53: lead screw

## Claims

1. Front seat that can be flattened forward, **characterized by** comprising:
- a sliding rail assembly (1),
the sliding rail assembly comprising a lower sliding rail module (1b) and an upper sliding rail module (1a) slidingly arranged on the lower sliding rail module (1b),
the lower sliding rail module (1b) being used for fitting to an automobile floor, and
a rear end of the upper sliding rail module (1a) being fixedly provided with an adapter component (1c) that extends upward;
- a backrest framework (2) that is rotatably mounted on the adapter component (1c),
- a first driving assembly being provided on the backrest framework (2), and the first driving assembly being used for driving the backrest framework (2) to rotate forward or backward;
- a seat cushion framework (3) that is located on an upper side of the upper sliding rail module (1a), a first connecting rod (4) being provided between a front part of the seat cushion framework (3) and the upper sliding rail module (1a), two ends of the first connecting rod (4) being hingedly connected to the seat cushion framework (3) and the upper sliding rail module (1a), respectively, and a rear part of the seat cushion framework (3) being fitted onto the upper sliding rail module (1a) so as to be able to move forward and backward; and
- a second driving assembly (5) that is used for driving the seat cushion framework (3) to move forward and backward relative to the upper sliding rail module (1a),
wherein in a process of the second driving assembly (5) driving the rear part of the seat cushion framework (3) to move forward, the first connecting rod (4) can rotate about a centre of a hinge connection thereof to the upper sliding rail module (1a), thereby driving the front part of the seat cushion framework (3) to move forward.

2. Front seat that can be flattened forward according to claim 1, **characterized in that**: the upper sliding rail module (1a) comprises an upper rail (11), the upper rail (11) being provided with a sliding slot (a) that extends along a length thereof, and the rear part of the seat cushion framework (3) being fitted in the sliding slot (a) by means of a supporting component (8) so as to be able to move forward and backward.

3. Front seat that can be flattened forward according to claim 2, **characterized in that**: the second driving assembly (5) comprises an electric motor (52), a lead screw (53) that is driven to rotate by the electric motor (52), and a nut sleeve (51) that is threaded onto the lead screw (53), a base of the electric motor (52) being rotatably fitted on the upper sliding rail module (1a), the nut sleeve (51) and the supporting component (8) maintaining a fixed connection, the supporting component (8) being rotatably connected to the rear part of the seat cushion framework (3) by means of a pin (b), and the pin (b) being supported in the sliding slot (a).

4. Front seat that can be flattened forward according to claim 2 or 3, **characterized in that**: the sliding slot (a) comprises an inclined section (a1) and a horizontal section (a2), which are successively connected from a front to a rear, and a height at a front end of the inclined section (a1) is lower than a height at a rear end of the inclined section (a1).

5. Front seat that can be flattened forward according to anyone of the preceding claims, **characterized in that**: two groups of the upper rail (11) are provided, the two groups of upper rails (11) being arranged symmetrically, and two sides of the rear part of the seat cushion framework (3) being fitted onto the two groups of upper rails (11) so as to be able to move forward and backward.

6. Front seat that can be flattened forward according to claim 5, **characterized in that**: two groups of the first connecting rod (4) are provided, upper ends of the two groups of first connecting rods (4) being hingedly connected to two sides of the front part of the seat cushion framework (3), respectively, and lower ends of the two groups of first connecting rods (4) being respectively hingedly connected to the corresponding upper rail (11).

7. Front seat that can be flattened forward according to claim 5 or 6, **characterized in that**: the second driving assembly (5) is arranged at an inner side of one of the groups of upper rails (11), the base of the electric motor (52) is rotatably fitted to a front part of an inner side of this upper rail (11), and the lead screw (53) extends backward along the length of the upper rail (11).

8. Front seat that can be flattened forward according to anyone of the preceding claims 5 to 7, **characterized in that**: the rear part of the seat cushion framework (3) is provided with a supporting transverse rod (31), two ends of the supporting transverse rod (31) being connected to an adapter (6) that extends downward, and the pin (b) being fitted to a lower part of the adapter (6).

9. Front seat that can be flattened forward according to anyone of the preceding claims, **characterized in that**: the first connecting rod (4) is obliquely arranged between the front part of the seat cushion framework (3) and the upper sliding rail module (1a).
